Europäisches Patentamt

European Patent Office

Office européen des brevets

(19)

(11) Publication number: **0 256 996 B1**

# EUROPEAN PATENT SPECIFICATION

(12)

(45) Date of publication of patent specification :
29.05.91 Bulletin 91/22

(51) Int. Cl.⁵ : **B61B 13/04,** B61C 13/04

(21) Application number : 87830275.1

(22) Date of filing : 16.07.87

(54) **Suspended closed-circuit track monorail transportation system of modular design employing flexible carriages driven by pairs of friction wheels.**

(30) Priority : 18.07.86 IT 62986

(43) Date of publication of application :
24.02.88 Bulletin 88/08

(45) Publication of the grant of the patent :
29.05.91 Bulletin 91/22

(84) Designated Contracting States :
DE ES FR GB NL

(56) References cited :
DE-A- 3 144 676
DE-A- 3 501 202
US-A- 3 537 402
US-A- 4 015 537

(73) Proprietor : METALPROGETTI di Santicchi
Augusto & C. - S.n.c.
Via A. Morettini, 53
I-06100 Perugia (IT)

(72) Inventor : Santicchi, Augusto
S. Andrea delle Fratte
I-06100 Perugia (IT)

(74) Representative : Baldi, Claudio
Piazza Ghislieri, 3
I-60035 Jesi (Ancona) (IT)

## Description

This patent application for an industrial invention concerns a suspended closed-track monorail transportation system, of modular design, that uses flexible transporter carriages driven by pairs of friction wheels.

The most conventional forms of overhead conveyer systems for moving objects during selection, distribution, or storage are based upon the use of a continuous closed belt upon which the items to be transported are hung ; the belt travels around a set course, driven by a chain wound around two pulleys, one of the latter providing the drive.

Although quite functional, these system do have some drawbacks, the main one being the difficulties entailed in modifying the direction and length of course once the system has been definitively installed, as this would first of all involve using another conveyer belt of suitable length with a new, sufficiently powerful motor and, in addition, the modification of the supporting structure of the plant, thus resulting in a rather complex operation.

In addition to this, as a result of the fact that a continuous closed belt is employed as means of transportation, on such systems it is impossible to transfer objects from one work station to another without going through all the intermediate stations situated between the point of departure and the destination.

In consideration of the above drawbacks, overhead conveyer systems have been in existence for some time now which, in place of the continuous closed conveyer belt, are equipped with several independent carriages from which the objects are hung, said carriages being able to move directly from one station on the system to another, even when the stations are not consecutive, without having to go round the whole course and pass through the intermediate stations en route.

In this type of system there is a guiding track within which the carriages run, together with a seperate driving line positioned above, generally composed of a chain that, at set intervals, has lateral protrusions onto which the carriages hook and which moves them along the route taken by the system.

With regard to the direct transfer of each carriage from one station on the system to another, even when the latter are not consecutive, it should be said that the guiding line on these systems is equipped along its course with mobile segments that can move sideways while remaining parallel and function as points, able to divert the carriages from one line of the system to another, enabling them to go in any direction.

Even these more recent systems, although in a position to repair some of the defects of continuous closed conveyer belts, cannot be considered completely satisfactory because of their complex and not very practical structure and because of some functional shortcomings that impair their prerformance.

As regards the complexity of their structure, not only should the difficulties involved in building and putting into working order a system that consists of two seperate lines, one acting as a carrier and the other providing the drive, be stressed, but also the serious problems that would be encountered should one wish to lengthen the course of the system, something that would involve substantial and complex modifications, not only to the carriage carrying line, but above all to the drive line that, as is the case with the old systems, would have to have a more powerful motor.

The actual carriages on these systems, because of the rigid nature of their longitudinal structure, encounter difficulties when going round bends, where, especially in the case of the sharper binds, they tend to stick, thus compelling the designer to always plan an overhead conveyer system with rather wide bends so that a rigid carriage can proceed without impediment ; in addition to this, it should also be added that when they reach a bend these carriages position themselves along a succession of chords in relation to the actual bend, which presupposes that the designer takes this limit into account with regard to pillars, supports or the like.

All this obviously involves a considerable waste of space, as such systems have to be installed in particularly large areas if they are to be set up in such a way as to render them useful and advantageous.

The conformation of the system's various loading, off-loading and work stations is particularly complex, along with that of the system that feeds them ; in fact these stations are generally situated at the sides of the main lines and are served by an outward section and a return one, usually perpendicular to the main line, and linked by a semi-circular arc that effectively constitutes the zone in which the carriage stops, usually being located at a level somewhat below that of the main line.

Thus, in order to channel the carriages into these lateral branches, the guiding line has areas equipped with devices that divert the course of the carriages into the downward sloping outward section of an operating station along which the carriage descends simply with the aid of gravity.

Once the operations at the station have been terminated, the carriage is hooked onto a drive mechanism that enables it to complete the sloping return tract and go back up to the level of the main line.

From this it is clear that just the actual setting up of a work station must be considered somewhat complex, in that the lateral ramification of the carriage guiding line, in addition to a suitable conformation, must also have an independent mechanism for driving the carriages along the upward-sloping return section from the station.

In addition to this, the interruption of the main conveyer line at the mobile segments that act as points and the very presence of these mobile segments, whose positioning is usually controlled electrically, are particularly inconvenient, especially in the event of powercuts when the progress of the carriages, if not completely halted, would at least be limited to the route that, depending on the positioning of the points, had been selected before the powercut, because the mobile elements that comprise the points cannot be moved manually.

Another type of similar suspended transportation systems is described in patent US-A-3 537 402 in the name of Harkess ; this system involves carriages suspended and sliding along a double "T" rail which closes the system track.

These carriages are driven by means of pairs of friction wheels positioned along the above rail at regular intervals which are however not less than the length of each of the carriages.

Each carriage consists of a longitudinal bar suspended to a metal belt which is in turn supported by a series of "U" shaped brackets each bearing a pair of opposing wheels resting and sliding on the front side of the double "T" rail.

In the face of such a large number of defects, the creation of an overhead transportation system according to the invention has become more appropriate than ever ; an invention which, in comparison with previous systems, is still equipped with independent carriages but has a far greater degree of functionality.

In fact, it consists of a continuous monorail made up of several set modular elements that can be combined in a variety of ways, said monorail acting both as a track and carrying structure for a number of carriages made in flexible laminate from which the articles to be transported can be hung.

The carriages move along the monorail driven by pairs of friction wheels, one on each side, spaced at regular intervals along the route, the distance between each obviously being less than the length of each carriage so that the latter are constantly subject to the driving action of at least one pair of wheels.

From this first overall description of the system according to the invention it is already possible to observe the notable degree of progress brought into the technical field by this invention.

First and foremost, the highly simplified nature of this system should be emphasised : in this case, a modular monorail, made up of a simple metal tube with a longitudinal incision on its lower surface has the dual function of guiding and carrying, a function that in previous systems was delegated seperately to far more complex entities that here can be eliminated, the result being that any modifications to the system can be carried out very rapidly and, above all, without encountering any particular technical problems ; this is due to the simplicity of installation of any additional tubular elements necessary from time to time and also due to the structure of the carriage driving system, the adaptation thereof simply requiring the addition of further pairs of friction wheels to the system, attaching them onto the newly installed tracts of monorail.

In the system according to the invention the points are created in a very simple fashion, there being at the points of intersection and confluence of the sections of monorail, inside the actual monorail, small revolving barriers that are automatically activated using a conventional control device and, if need be, can also be activated by hand.

In contrast with previous systems, the provision of said revolving internal barriers enables the continuity of the track to be maintained so that that there are no interruptions ; this, together with the possibility of acting manually upon the points, permits the carriages to be driven and moved around even when the system is without electricity, thus avoiding useless loss of time and disruptions during the work cycle.

Furthermore, the new structural arrangement that such a system lends to the loading, off-loading and work stations must also be considered of particular importance.

It has already been said that such stations must generally be situated at a lower level in relation to the main conveyer line, and it has also been pointed out how, in previous systems, it was necessary, on the one hand, to endow the lateral ramification of the line with an appropriate conformation depending on the degree of inclination required, and, on the other hand, to attach a drive system, studied for the purpose and seperate from the main one, to bring the carriage back up into the main line once its period of arrest at the lowest point of the lateral ramification has terminated.

On the system according to the invention these problems have been overcome with extremely simple solutions that have enabled many technical difficulties to be eliminated together with many of the economic burdens that the particular overall structure of the stations used in previous system entails.

In the herein described system each lateral branch is simply made up of a modular U-shaped element designed for the purpose, made from the same shaped tubing as the main conveyer line, with which it is therefore able to make a perfect connection ; said element, because of its inherent elasticity, boasts – without detracting from its principal function – a substantial degree of flexibility which, within reasonable limits, allows the curved external end that unites the two branches to be lowered as required, thus bringing about the inclination of the rectilinear outward and return sections, the end being fixed at the desired operating height.

With regard to the feeding of the stations, it should be noted that in the system according to the invention the carriage drive on the outward and return sections of these sloping U-shaped branches is supplied by the usual pairs of friction wheels that are attached to this section of the monorail in the same way as they are attached at any other point along the conveyer line, with, however, an advantage over previous systems in that the carriage drive in this case is not only present on the upward sloping tract but also on the descending one, acting almost as a brake and preventing the objects being transported from falling to abruptly, not to mention the fact it is also possible to interrupt the descent of the carriage on its way to the station at the desired point.

For further clarity of explanation, the description of the invention continues with reference to the attached diagrams, reproduced for illustrative and not restrictive purposes, in which ;

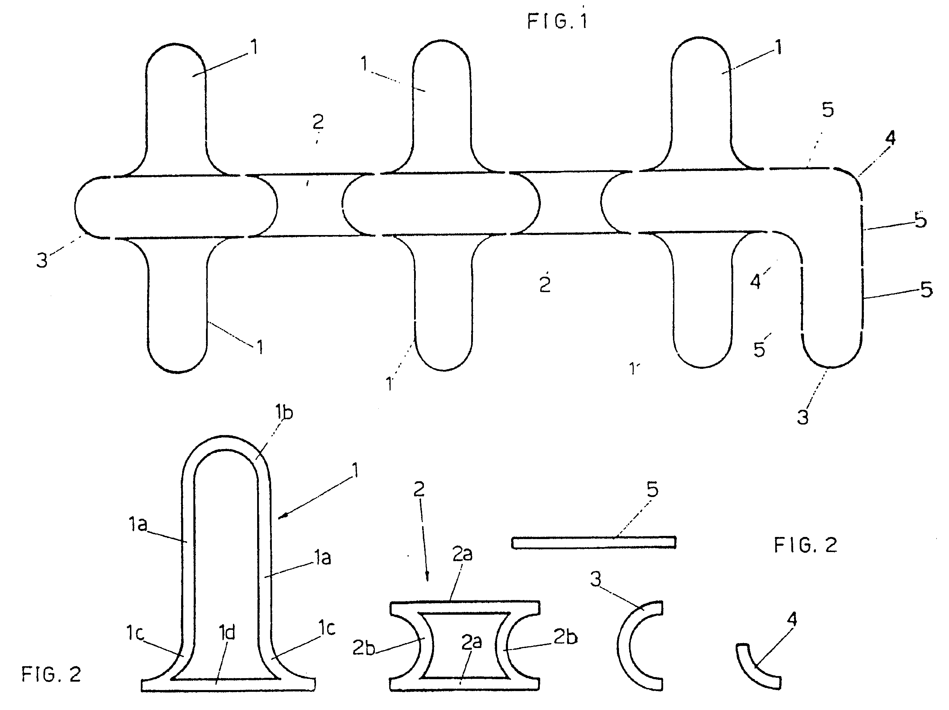

- figure 1 shows the plan view of an imaginary course obtained by combining the modular elements used in the setting up of the system according to the invention ;
- figure 2 shows a plan view of the various seperate modular elements used in the setting up of the system according to the invention ;
- figure 3 shows a transporter carriage of the type used in the system according to the invention ;
- figure 4 is a section of the monorail within which the carriage is situated, showing the pair of friction wheels which drive the carriage ;
- figure 5 is the plan view of a section of the monorail where the friction wheels that drive the carriage are mounted.

With reference to the attached drawings, the following components are used to set up the system according to the invention :

- modular element (1) comprising a closed-track monorail with two straight parallel sections (1a) connected to each other, at one end by a semi-circular arc (1b) and at the other end they are connected by means of two quarter-circle arcs (1c) to a straight section (1d) lying perpendicular to sections (1a), the former actually making up a section of the main transporting line of the circuit ; the abovementioned straight sections (1a) connected by the curve (1b) make up lateral branches which feed the work stations positioned along the abovementioned main transporting line.

- A modular element (2) composed of a closed-track monorail with two straight parallel sections (2a), the ends of which are connected by two semi-circular arcs (2b), in such a way that the two straight sections (2a) actually make up two tracts of the circuit main line, these being transversally connected by the two curves (2b).

- A modular element (3) consisting of a monorail curved to form a semi-circular arc linking two straight tracts of the circuit, the latter being parallel but leading in opposites directions.

- A modular element (4) consisting of a monorail curved to form a quarter-circle arc which connects two straight tracts of the circuit positioned at right angles to one another.

- A modular element (5) consisting of a straight tract of monorail.

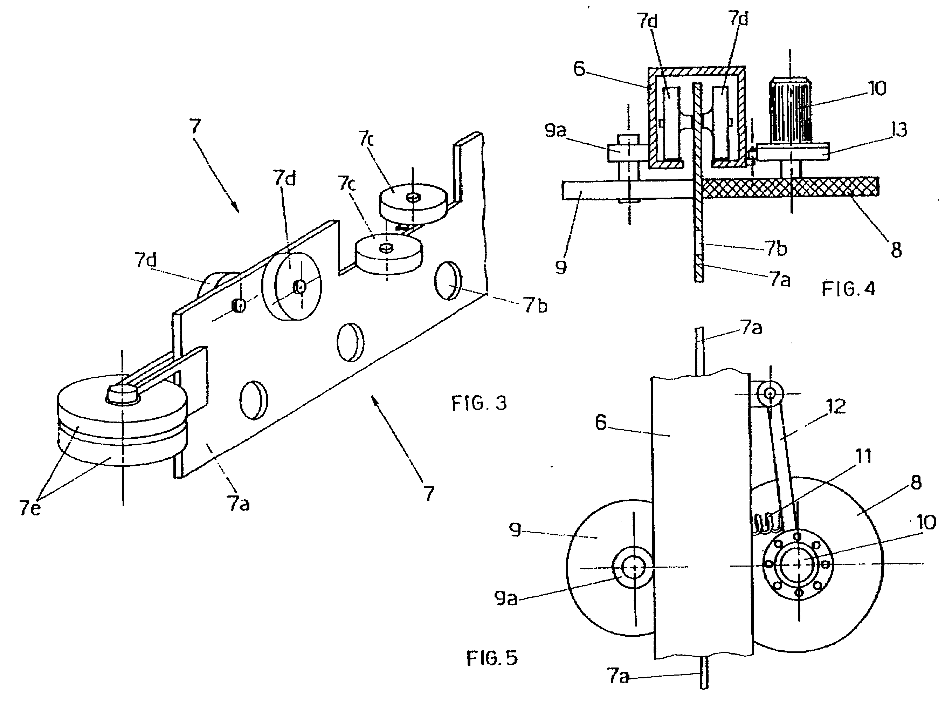

As illustrated in fig. 4, all the abovementioned modular components are made from a tubular bar (6) with a central incision running for the entire length of its lower surface in such a way that it acts as a carrier and guide for the transporter carriages (7), the latter consisting of lengths of flexible laminate (7a) near the lower edge of which there are holes (7b) from which the objects to be transported are hung by means of hooks or brackets, while along their upper edge there is a set of slide wheels (7c) rotating around a vertical axis alternating with a set of slide wheels rotating around a horizontal axis, said wheels arranged in such a way as to be able to accurately guide the flexible laminate (7a) inside the longitudinal opening that runs for the entire length of the lower wall of the monorail (6), thus avoiding the possibility of horizontal or vertical oscillaion.

On the front edge of each carriage (7) according to the direction of travel, a pair of slide wheels (7e) placed one above the other is positioned underneath the top edge of the flexible strip (7a) ; the diameter of said wheels is identical to the internal width of the monorail (6) with the result that the front edge of the strip is prevented form skidding sideways along the curved sections of the circuit.

As already mentioned, each carriage (7) is driven along the monorail (6) by pairs of friction wheels, each pair made up, as illustrated in figs. 4 and 5, of a friction wheel (8), touching one surface of the flexible strip (7a) and working in conjunction with a counter wheel (9) touching the opposite surface of the strip (7a). The counter wheel (9) is freely supported by an anchoring pin (9a) fixed externally on the side of the monorail (6), while the friction wheel (8), activated directly by the shaft of a motor (10) or, alternatively, by means of suitable gears, connected together with the other friction wheels to a single driving mechanism, is constantly pressed against the strip (7) by a precompressed spring (11) which draws the oscillating arm (12) towards the monorail (6), said arm being hinged to the monorail (6) at one end and terminating at the other end in a flange (12) which is attached to the motor (10).

It should be remembered that along the monorail (6) the pairs of drive wheels are distributed at intervals, which are less than the length of the carriages (7) to be driven.

To be able to effectively control the course covered by the carriages from one station to another without following the order of sequence of the carriages on the circuit, at the points of intersection and confluence of the monorail sections, inside the actual monorail, there are points, simply made up of revolving barriers, activated manually or automatically, using conventional control devices of standard design and therefore not described herein.

Similarly, it should be noted that this description purposely omits any reference to certain structural details of standard design, such as those pertaining to the metal supporting structure of the suspended monorail and the system of route control and selection for each carriage ; for the production of the abovementioned, no inventive effort is required.

## Claims

1. A suspended closes-track monorail transportation system, of modular design fitted with carriages (7) made of flexible laminate driven by a pair of friction wheels (8) and (9) positioned at intervals no less than the length of the above carriages (7), characterized in that the support and guide element of the above carriages consists of a monorail made of a tubular bar having a central incision running along the entire lenght of its lower surface for housing the wheels of the above carriages (7).

2. Suspended closed-track monorail transportation system of modular design, using flexible transporter carriages driven by pairs of friction wheels, according to claim 1), characterised by the fact that the modular elements used for the monorail, made from a tubular bar (6) with a central incision running along the entire length of its lower surface with the purpose of housing the carriages (7) when in motion, have the following, characteristics :

- a modular element (1) consisting of a closed-track monorail with two straight parallel sections (1a) connected to each other at one end by a semi-circular arc (1b) and at the other connected by two quarter-circle arcs (1c) to straight section (11), lying perpendicular to sections (1a), said straight section (1d) actually making up a tract of the main transporting line of the circuit, while the abovementioned straight sections (1a) connected by the curve (1b) make up lateral branches for feeding the work stations positioned along the abovementioned main transporting line ; at the points of connection between the straight and curved sections, inside the actual monorail, there are revolving barriers which are able to divert the course of the carriages ;
- a modular element (2) consisting of a closed-track monorail with two straight parallel sections (2a), the ends of which are connected by two semi-circular arcs (2b) in such a way that the two straight sections (2a) go to make up two tracts of the main circuit, these being transversally connected by the two curved (2b) ; at the points of connection between the straight and curved scetions, inside the actual monorail, there are revolving barriers, able to divert the course of the carriages ;
- a modular element (3) consisting of a monorail curved to form a semi-circular arc, linking two straight of the circuit, said tracts being parallel but travelling in opposite directions ;
- a modular element (4) consisting of a monorail curved to form a quarter-circle arc which connects two straight tracts of the circuit positioned at right angles to one another ;
- a modular element (5) consisting of a straight tract of monorail.

3. Suspended closed-track monorail transportation system of modular design, according to claim 1), characterised in that the carriages (7) in flexible metal laminate (7a) holes (7b), near to its bottom edge, upon which hang, by means of suitable hooks or brackets, the objects to be transported, while along the top edge there is a set of small slide wheels (7c), rotating around a vertical axis, alternating with a set of small slide wheels (7d) rotating around a horizontal axis, arranged in such a way as to accurately guide the flexible strip (7a) inside the longitudinal opening along the lower wall of the monorail while avoiding horizontal and vertical oscillation ; on the front edge of each carriage (7) according to the direction of travel, a pair of slide wheels (7e), one above the other, is attached to the top edge of the flexible laminate(7a) the diameter of said wheels being identical to the internal width of the monorail, thus avoidinig sideway skidding where the front edge of the strip (7a) runs along the curved sections of the track.

4. Suspended closed-track monorail transportation system, of modular design, using flexible transporter carriages driven by pairs of friction wheels, according to claim 1), characterised by the fact that each pair of friction wheels is made up of one friction wheel (8), touching one surface of the strip (7a) working in conjuction with a counterwheel (9) touching the opposite surface of the strip (7a), said counterwheel (9) being freely supported on an anchoring pin (9a), fixed externally to the side of the monorail (6) ; the friction wheel (8) is activated directly by the shaft of the motor (10), or, alternatively, by means of a suitable form of transmission connected to a single drive mechanism together with the other friction wheels ; the friction wheel is constantly pressed against the strip (7a) by a pre-stressed spring (11) which draws the oscillating arm (12) towards the monorail (6), said arm (12) being hinged to the monorail (6) at one end and terminating in a flange (13) at the other end where the motor is attached.

## Ansprüche

1. Einschienenhängebahn mit geschlossenem Kreislauf, von modularer Struktur, die Transportwagen (7) aus flexiblem Laminat verwendet, für deren Betrieb Reibungsräderpaare (8) und (9) verwendet werden, die in räumlichen Abständen versetzt sind, Abstände, die auf jeden Fall kürzer als die obengenannten Transportwagen (7) sind, dadurch gekennzeichnet, daß als Halterungs-und Führungselement der vorgenannten Wagen eine Einschienenbahn verwendet wird, die aus einer röhrenformigen Schiene besteht und einen zentralen Einschnitt hat, der sich über die ganze Länge ihrer unteren Flanke erstreckt, die die Aufgabe hat, die Räder der vorgenannten Transportwagen (7) aufzunehmen.

2. Einschienenhängebahn mit geschlossenem Kreislauf, von modularer Struktur, die flexible Transportwagen und Reibungsräderpaare für ihren Betrieb verwendet, gemäß Patentanspruch 1, dadurch gekennzeichnet, daß die zur Verwirklichung der Einschienenbahn verwendeten Module, die aus einer röhrenförmigen an der unteren und zentralen Seite zur Aufnahme der Wagen (7) aufgeschnittenen Schiene gewonnen werden, wie folgt gestaltet sind :

– Modul (1) besteht aus einer Schiene, die eine Entwicklung mit geschlossener Bahn hat, in der zwei gerade und parallele, miteinander verbundene Strecken (1a) zu erkennen sind, die an einem Ende durch einen Halbkreisbogen (1b) und am anderen Ende durch zwei Viertelkreisbogen (1c) an eine gerade, zu den Strecken (1a) senkrecht liegende Strecke angeschlossen sind, die praktisch einen Abschnitt der Haupttransportlinie des Kreislaufs darstellt ; es ist vorgesehen, daß die obengenannten geradllinigen durch die Kurve (1b) verbundenen Strecken (1a) seitliche Abzweigungen für die Speisung der Arbeitsstationen an der vorgenannten Haupttransportlinie darstellen; es ist ferner vorgesehen, daß in den Anschlußstellen zwischen den geradlinigen und gebogenen Strecken, innerhalb der Einschienenbahn, drehbare Schotte zur Ablenkung des Wagenwegs vorgesehen sind ;

– Modul (2) besteht aus einer Einschienenbahn, die eine Entwicklung mit geschlossener Bahn hat, in der zwei geradlinige und parallele Strecken (2a) zu erkennen sind, deren Ende durch zwei Halbkreisbogen (2) verbunden sind, da vorgesehen ist, daß die zwei geradlinigen Strecken (2a) praktisch zwei Abschnitte der Hauptlinie des Kreislaufs bilden, Abschnitte, die trasversal durch die zwei Kurven (2b) verbunden sind ; es ist wiederum vorgesehen, daß in den Anschlußstellen zwischen den geradlinigen und gebogenen Strecken, innerhalb der Einschienenbahn, drehbare Schotte zur Ablenkung des Wagenwegs vorgesehen sind.

– Modul (3) besteht aus einer gemäß einem Halbkreisbogen gebogenen Einschienenbahn, durch die zwei geradlinige parallele Abschnitte des Kreislaufs untereinander verbunden werden, aber in umgekehrter Fahrtrichtung

– Modul (4) besteht aus einer gemäß einem Viertelkreisbogen gebogenen Einschienenbahn, durch die zwei geradlinige rechtwinklige Abschnitte des Kreislaufs untereinander verbunden werden ;

– Modul (5) besteht aus einem geradlinigen Einschienenbahnabschnitt.

3. Einschienenhängebahn mit geschlossenem Kreislauf, von modularer Struktur, gemäß Patentanspruch 1, dadurch gekennzeichnet, daß die Transportwagen (7) aus flexiblem Metall-Laminat (7a) in der Nähe ihres unteren Randes ösen (7b) aufweisen, in die durch geeignete Aufhängehakem oder Halterungen die zu transportierenden Gegenstände eingehängt werden, während am oberen Rand entlang eine Reihe von um eine vertikale Achse drehbare Laufrollen (7c) angebracht ist, die von einer Reihe von um eine horizontale Achse drehbaren Laufrollen (7d) abgewechselt wird, die so angeordnet ist, daß sie ohne horizontale oder vertikale Schwingungen das flexible Band (7a) in die an der ganzen unteren Wand der Einschienenbahn angebrachte Längsöffnung einführt ; es ist vorgesehen, daß am vorderen Rand eines jeden Wagens (7) in Fahrtrichtung auf die obere Kante des flexiblen Laminats (7a) ein Paar übereinandergesetzte Laufrollen (7e) angebracht ist, die einen Durchmesser aufweisen, der mit der inneren Breite der Einschienenbahn identisch ist, um ein seitliches Abrutschen an der Kreuzung der gebogenen Strecken der Linie zu Lasten des vorderen Bandrandes (7a) zu vermeiden.

4. Einschienenhängebahn mit geschlossenem Kreislauf, von modularer Struktur, die flexible Transportwagen verwendet und Reibungsräderpaare zu deren Betrieb, gemäß Patentanspruch 1, dadurch gekennzeichnet, daß jedes Reibungsräderpaar aus einem Reibungsrad (8) besteht, das auf einer Kopfflanke des Bandes (7a) haftet und mit einem Gegenrad (9) zusammenarbeitet, das auf der gegenüberliegenden Flanke des Bandes haftet; es ist vorgesehen, daß das Gegenrad (9) im Leerlauf auf einer außen an der Seite der Einschienenbahn (6) befestigten Schwenkpunktkonsole (9a) gelagert ist ; es ist ferner vorgesehen, daß das Reibungsrad (8), das direkt von der Motorwelle (10) betrieben wird, aber als Alternative durch geeignete Umlenkungen, zusammen mit anderen Reibungsrädern an eine einzige Motorisierung angeschlossen werden könnte, konstant durch eine vorgespannte Feder (11) gegen das Band (7a) gedrückt wird, Feder, die den Schwingarm (12) gegen die Einschienenbahn (6) zieht, der aufklappbar an dieselbe Einschienenbahn an einem Ende angebracht ist und an dem anderen Ende mit einem Flansch (13), an dem der Motor befestigt ist, endet.

## Revendications

1. Equipement transporteur aérien monorail à circuit fermé, de structure modulaire, utilisant des petits chariots de transport (7), réalisés en laminé flexible et pour l'entraînement desquels on emploie une série de couples de roues de friction (8) et (9), montées avec des intervalles d'espace qui doivent de toute façon être inférieurs à la longueur des susdits chariots de transport (7), caractérisé en ce qu'il utilise, en tant qu'élément de support et de glissement des susdits chariots, un rail constitué d'une barre tubulaire ayant une incision centrale qui s'étend sur toute la longueur de sa partie inférieure et portant ainsi les roues des susmentionnés chariots de transport (7).

2. Equipement transporteur aérien monorail à circuit fermé, de structure modulaire, utilisant des petits chariots de transport flexibles et des couples de roues de friction pour leur entraînement, selon la revendication 1, caractérisé en ce que les modules utilisés pour la réalisation du monorail, tirés d'une barre tubulaire (6), coupée inférieurement et centralement pour toute sa longueur afin de loger les petits chariots (7) pendant leur mouvement, ont la configuration suivante :
   – le module (1) consiste en un monorail ayant un développement à trajectoire fermée, dans laquelle on peut identifier deux segments rectilignes et parallèles (1a) reliés entre eux, à une extrémité, par un arc de demi-circonférence (1b), tandis qu'à l'autre extrémité les susmentionnés résultent reliés, aux moyens de deux arcs d'un quart de circonférence (1c), à un segment rectiligne (1d), perpendiculaire aux segments (1a), et qui en fait constitue un tronçon de la ligne principale de transport du circuit ; étant prévu que les susmentionnés segments rectilignes (1a), reliés par le coude (1b), constituent des bifurcations de dérivation latérale pour l'alimentation des postes de travail installés le long de ladite ligne principale de transport ; étant aussi prévu que sur les points de raccord entre les segments rectilignes et les curvilignes, à l'interne du monorail, soient installées des cloisons rotatives capables de dévier le chemin des petits chariots ;
   – le module (2) consiste en un monorail ayant un développement à trajectoire fermée, dans laquelle on peut identifier deux segments rectilignes et parallèles (2a) dont les extrémités résultent reliées par deux arcs de demi-circonférence (2b) ; étant prévu que les deux segments rectilignes (2a) constituent deux tronçons de la ligne principale du circuit, étant lesdits tronçons reliés transversalement par les deux coudes (2b) ; étant aussi prévu que sur les points de raccord entre les segments rectilignes et les curvilignes, à l'interne du monorail, soient installées des cloisons rotatives capables de dévier le chemin des petits chariots ;
   – le module (3) consiste en un monorail courbé selon un arc de demi-circonférence, apte à relier entre eux deux tronçons rectilignes parallèles du circuit, mais dans le sens contraire de marche ;
   – le module (4) consiste en un monorail courbé selon un arc d'un quart de circonférence, apte à relier entre eux deux tronçons rectilignes orthogonaux du circuit ;
   – le module (5) consiste en un tronçon rectiligne de monorail ;

3. Equipement transporteur aérien monorail à circuit fermé, de structure modulaire, selon la revendication 1, caractérisé en ce que les petits chariots de transport (7) en laminé métallique et flexible (7a) présentent, près de leur bord inférieur, des fentes (7b) dans lesquelles suspendre, au moyen de crochets ou de supports, les objets à transporter, tandis que sur le bord supérieur est installée une série de petites roues de glissement (7c), qui tournent autour d'un axe vertical, alternées à une autre série de petites roues de glissement (7d) qui tournent autour d'un axe horizontal, disposées de manière à guider exactement, sans possibilité d'oscillations verticales ou horizontales, le tapis flexible (7a) dans l'ouverture longitudinale prévue le long de toute la paroi inférieure du monorail ; étant prévu que sur le bord frontal de chaque petit chariot (7), selon le sens de marche, soit installé sur l'arête supérieure du laminé flexible (7a) un couple de petites roues superposées de glissement (7e) et dont le diamètre est identique à la largeur interne du monorail de manière à éviter les déplacements latéraux lors du croisement des segments curvilignes du chemin et au détriment du bord antérieur du tapis (7a).

4. Equipement transporteur aérien monorail à circuit fermé, de structure modulaire, utilisant des petits chariots flexible de transport et des couples de roues de friction pour leur entraînement, selon la revendication 1, caractérisé en ce que chaque couple de roues de friction résulte constitué d'une roue de friction (8) qui adhère d'un côté du tapis (7a) et qui coopère avec une contre-roue (9) qui adhère à la partie opposée du tapis (7a) ; étant prévu que la contre-roue (9) résulte supportée à vide à une tablette de pivotement (9a) fixée à l'extérieur et latéralement au monorail (6) ; étant aussi prévu que la roue de friction (8) qui est activée directement par l'arbre du moteur (10), mais qu'alternativement on peut raccorder à d'autres roues de friction avec une unique motorisation au moyen de renvois adaptés, résulte constamment appuyée contre le tapis (7a) au moyen d'un ressort pré-tendu (11) qui attire vers le monorail (6) le petit bras oscillant (12), pivoté sur le monorail même (6) à une extrémité, tandis que l'autre extrémité se termine par une bride (13) à laquelle est fixé le moteur (10).

FIG.1

FIG. 2

FIG. 2

EP 0 256 996 B1

FIG. 3

FIG. 4

FIG. 5

EP 0 256 996 B1